# EUROPEAN PATENT SPECIFICATION

(11) **EP 3 220 791 B1**
(45) Date of publication and mention of the grant of the patent: **09.09.2020**
(21) Application number: 14906629.2
(22) Date of filing: 21.11.2014
(51) Int. Cl.: E01H 1/08, A47L 5/14, F04D 25/08, B25F 5/02

(54) **POWER TOOL**
ELEKTROWERKZEUG
OUTIL ÉLECTRIQUE

(43) Date of publication of application: 27.09.2017
(73) Proprietor: Techtronic Industries Co., Ltd., Tsuen Wan, N.T. Hong Kong (CN)
(72) Inventor: RICKEY, Todd, Hong Kong (CN)
(74) Representative: Grünecker Patent- und Rechtsanwälte PartG mbB
(86) International application number: PCT/CN2014/091958
(87) International publication number: WO 2016/078098

(56) References cited:
- EP-A1- 2 581 011
- EP-A1- 2 581 011
- WO-A1-2014/119181
- CN-A- 104 154 008
- CN-U- 204 327 537
- GB-A- 2 469 313
- JP-A- 2004 041 760
- US-A1- 2002 108 206

## Description

### TECHNICAL FIELD

The present invention relates to a power tool and particularly to a cordless blower vacuum power tool.

### BACKGROUND

In order to clean a large area of ground surface with debris such as leaves, soils or general waste, gardeners and keepers generally use power tools such as a blower vacuum (see US 2002/108206 A1) to shorten the cleaning duration. However, it is not uncommon that the gardeners have to work very long hours at locations such as a large park to complete a full service. Therefore, it is inevitable that the gardeners will have to use a blower vacuum for a very long period of time.

Although a blower or vacuum tool will reduce the effort for workers, the size and driving mechanism of a blower or vacuum tool will have considerable weight which must be carried by the workers. In turn, workers who use these tools will have to carry and manipulate the tool to complete their work, including the pointing or directing of the blower or vacuuming portions of the tool into a cleaning area. Over time, a user may suffer from fatigue or work related injuries from the constant manipulation and carrying of the tool.

### SUMMARY OF THE INVENTION

In accordance with a first aspect of the present invention, there is provided a blower in accordance with claim 1.

In an embodiment of the first aspect, the blowing or suction force is delivered to the operation opening via an operation conduit.

In the first aspect, the battery assembly when combined with the main body urges the operation conduit in a direction towards the operation surface.

In an embodiment of the first aspect, the battery assembly is combined with the main body in a position adjacent to the operation unit.

In the first aspect, the main body further comprises a handle at a position substantially above the operation unit.

In an embodiment of the first aspect, the handle is arranged to be grasped by a user of the blower such that the combined main body and the battery assembly is arranged to urge the operation conduit towards the operating surface.

In an embodiment of the first aspect, the main body further comprises an auxiliary grip adjacent to the handle.

In an embodiment of the first aspect, the auxiliary grip is positioned substantially above the battery assembly.

In an embodiment of the first aspect, the handle and the auxiliary grip are arranged to allow a dual-hand operation of the blower.

In an embodiment of the first aspect, the auxiliary grip is arranged to be grasped by the user to direct the operation conduit to the operating surface.

In an embodiment of the first aspect, the operation unit includes a motor arranged to drive a fan.

In an embodiment of the first aspect, the battery assembly is arranged to be mounted to the main body at a position adjacent to the motor.

In an embodiment of the first aspect, the motor is arranged to operate with a rotational axis substantially perpendicular to a central axis of the operation opening.

In an embodiment of the first aspect, the motor is arranged to operate with a rotational axis substantially parallel to a central axis of the operation opening.

In an embodiment of the first aspect, the battery assembly is arranged to be removably mounted to the main body.

In an embodiment of the first aspect, the main body further comprises a battery locking mechanism arranged to secure the battery assembly to the main body.

In an embodiment of the first aspect, the blower is arranged to operate in at least one of a vacuum mode and a blower mode with the operation conduit operating as a vacuum tube or a blower tube respectively.

In an embodiment of the first aspect, when the blower is configured to operate in a blower mode, the center of gravity of the combined main body and the battery assembly is adjacent to a connecting position for connecting the blower tube to the main body.

In an embodiment of the first aspect, the battery assembly is arranged to be mounted to the main body adjacent to the blower tube.

In an embodiment of the first aspect, when the blower is configured to operate in a vacuum mode, the center of gravity of the combined main body and the battery assembly is adjacent to a joining position for joining a debris container to the main body.

In an embodiment of the first aspect, the battery assembly is arranged to be mounted to the main body adjacent to the debris container.

In an embodiment of the first aspect, the operating surface is below the center of gravity of the combined main body and the battery assembly.

In accordance with the present disclosure, there may also be provided a power tool comprising a main body having an operation unit arranged to deliver a blowing or suction force to an operation opening; wherein the operation unit is powered by a battery assembly arranged to be combined with the main body such that when the main body is grasped by a user of the power tool, the power tool is arrange to rest in an equilibrium position about the user's grasp such that in the equilibrium position, the operation opening is substantially near an operation position.

The battery assembly may be arranged to be mounted to the main body in a position so as to minimize a force required to maintain the power tool in the equilibrium position.

The battery assembly may be arranged to be mounted to the main body in a position so as to minimize a force required to adjust the power tool from the equilibrium position to the operation position.

The blowing or suction force may be delivered to the operation opening via an operation conduit.

The battery assembly may be combined with the main body in a position adjacent to the operation unit.

A handle may be fixed to the main body at a position substantially above the operation unit, wherein the handle is arranged to be grasped by a user of the power tool.

The main body may further comprise an auxiliary grip adjacent to the handle.

The auxiliary grip may be positioned substantially above the battery assembly.

The handle and the auxiliary grip may be arranged to allow a dual-hand operation of the power tool.

The auxiliary grip may be arranged to be grasped by the user to direct the power tool to the operation position.

In an embodiment of the first aspect, the operation opening is below a center of gravity of the combined main body and the battery assembly.

In an embodiment of the first aspect, the power tool is a dual mode vacuum-blower apparatus.

These embodiments are advantageous in that the battery assembly of the blower is mounted to the main body of the blower in a position that the equilibrium position or orientation of the blower is optimized, such that the operation opening is in a position which is substantially near an operation position, when it is held by a user of the blower. The center of gravity of the combined main body and the battery assembly is optimized to direct the blower to an optimized direction when the blower is naturally held by a user. Such configuration allows the user to exert a minimized force required to maintain the blower in the equilibrium position, or to adjust the blower to the operation position near the equilibrium position. For example, a nozzle of a blower in such configuration may be urged to a ground surface when the blower is naturally or ergonomically held by a user due to the optimized position of center of gravity of the combined main body and the battery assembly of the blower. The user may conveniently clean the ground surface using such blower by exerting a minimized force to hold the power tool without applying additional forces to urge the nozzle of the blower towards the ground surface during a cleaning operation.

### BRIEF DESCRIPTION OF THE DRAWINGS

Embodiments of the present invention will now be described, by way of example, with reference to the accompanying drawings in which:
Figure 1 is a side view of a first operating mode of a blower in accordance with one embodiment of the present invention;
Figure 2 is a side view of a second operating mode of the blower of Figure 1;
Figure 3 is a side view of the first operating mode in a first usage position of the blower of Figure 1;
Figure 4 is a side view of the first operating mode in a second usage position of the blower of Figure 1;
Figure 5 is a side view of the second operating mode in a first usage position of the blower of Figure 1;
Figure 6 is a side view of a first operating mode of a blower in accordance with a second embodiment of the present invention;
Figure 7 is a side view of a second operating mode of the blower of Figure 6;
Figure 8 is a side view of the first operating mode in a first usage position of the blower of Figure 6;
Figure 9 is a side view of the first operating mode in a second usage position of the blower of Figure 6;
Figure 10 is a side view of the second operating mode in a first usage position of the blower of Figure 7;
Figure 11a is a generalized load distribution diagram of the blower in blower mode in accordance with Figure 3;
Figure 11b is a generalized load distribution diagram of a conventional blower design in blower mode;
Figure 12a is a generalized load distribution diagram of the blower in vacuum mode in accordance with Figure 5; and
Figure 12b is a generalized load distribution diagram of a convention blower design in vacuum mode.

### DETAILED DESCRIPTION OF THE PREFERRED EMBODIMENT

The following description is given by way of example only to illustrate preferred embodiments of the invention. In particular, the language and terminology used herein is for descriptive purposes only and is not intended to limit the scope or functionality of the invention. The invention may be employed in various combinations or embodiments utilizing various elements and means not explicitly described herein, but within the knowledge and skill of one ordinarily skilled in the art.

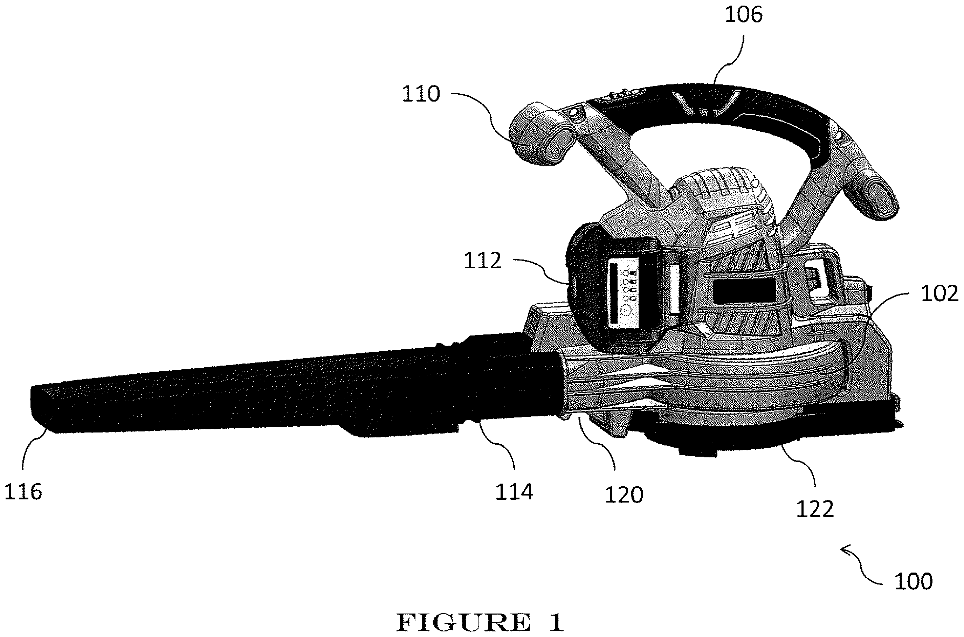

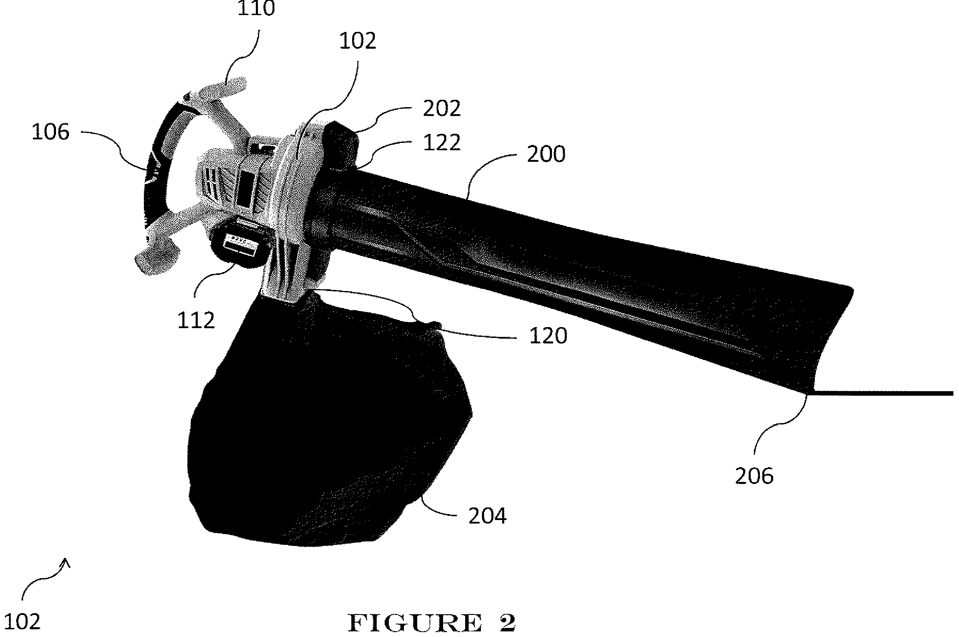

With reference to Figures 1 and 2, there is provided a blower comprising a main body having an operation unit arranged to deliver a blowing or suction force to an operation opening, wherein the operation unit is powered by a battery assembly arranged to be combined with the main body such that a center of gravity of the combined main body and the battery assembly, when in use, is arranged to urge the operation opening towards an operating surface.

In accordance with the embodiment as shown in Figure 1, there is illustrated a blower that is arranged to operate as a blower vacuum or known also as a blower vac 100. In this embodiment, the blower vacuum 100 includes a main body 102 that includes an operation unit (not shown) which may include a motor and a fan or impeller unit arranged to generate a blowing or suction force. The fan may also be connected to the motor via a transmission system that connects the motor's mechanical output to the fan. The operation unit are housed (or partially housed) by a housing of the main body 102.

In this embodiment, the blower vac is arranged to provide a blower functionality in which the motor is arranged to operate with a rotational axis that is substantially perpendicular to a central axis of the operation opening as shown in Figure 1. The motor that is used for driving the fan can be of a brushless type or a brushed type. In order to energize the motor, or the operation unit as a whole, a removable battery assembly 112 is mounted with the main body 102 for providing electrical energy required for the operation unit to operate.

In this embodiment of the blower vac 100, the main body 102 also includes a handle 106 that may be formed above the operation unit. In this example, the handle 106 has at least one auxiliary grip 110 adjacent the handle 106 which in this embodiment, is arranged for a dual-handed operation of the blower vac 100. The handle 106 may be formed integrally with the main body 102 and connects to the main body 102 through two leg-sections as shown in Figure 1. As shown on the handle 106, there may also be a center portion covered with a layer of anti-slip material for enhancing the grip of the handle by a user. Such a layer of anti-slip material can be a layer of soft rubber or a texturized surface.

In this example, the center portion of the handle is elongated and consists of different sections of different radii. This may be advantageous in that an inconsistency in the radius of the center portion may provide an optimized profiled for maximum grip when the handle 106 is being held in different positions and orientations by the user.

Between the handle 106 and the main body 102 near a forward end 120 of the main body 102, there may also be a battery port, such as a cavity formed for mounting a battery assembly 112. Once the battery assembly 112 is mounted with the main body 102, a battery locking mechanism (not shown) such as a latch matched with a groove on the battery assembly will activate and securely attach to the battery assembly 112 so as to prevent the battery assembly 112 from being accidentally removed from the main body 102.

In this embodiment, the battery assembly 112 may be of a considerable amount of the blower vac's total weight and is mounted near the forward end 120 of the main body 102. In turn, the blower vac 102's aggregated center of gravity is now shifted to be located in a position that urges an operation conduit 114, which in this embodiment is a blower tube, downwards and towards an operating surface. This results in the operation opening 116 to be urged towards an operating surface, which may include a ground surface or a surface that receives a blowing force and is below the center of gravity of the combined main body and the battery assembly. The auxiliary handle 110 in this embodiment may also be designed in a way that the auxiliary handle 110 is substantially above the battery assembly 112 when the blower vac 100 is being operated. This is advantageous in that the auxiliary handle provides a secondary gripping position for when delicate maneuvering of the blower vac 100 is necessary.

As previously mentioned, a blowing force will be generated by the operation unit in the embodiment as shown in Figure 1. Once the blowing force is generated, the blowing force will be delivered to an operation opening 116 on an operation conduit 114 of the blower vac 100. The operation conduit 114 may be removably mounted with a front portion of the main body 102 and the operation conduit 114 can be simply detached or replaced with other parts so that the blower vac can be easily stowed or for other functions that will be further described.

In accordance with the embodiment as shown in Figure 2, the blower vac 100 is configured to be used for vacuuming purpose. The blower vac 100 in vacuum mode requires an operation unit (not shown) which includes a motor, a transmission that connects the motor's mechanical output to a fan and the fan for generating a suction force. For suction functionality, the motor may be arranged to operate with a rotational axis that is substantially parallel to a central axis of an operation opening 206, which in this case is a vacuum opening 206 of a vacuum tube 200.

Preferably, as shown in Figures 1 and 2, the main body 102 is the same or substantially similar as the main body 102 may be implemented to operate in both a blower and vacuum mode. To facilitate these two functions, an air inlet may be attached to a vacuum tube whilst a blower tube arranged to deliver a blowing force is replaced with a vacuum bag or a debris collector so as to catch debris sucked by the vacuum tube.

The suction force generated by the operation unit (not shown) will be delivered by the fan to a vacuum opening 206 of a vacuum tube 200, which is detachably mounted with a fan cover 202 that is positioned between a bottom portion 122 of the blower vac and a mounting end of the vacuum tube 200. In order to store the collected waste properly, the blower vac in Figure 2 is designed to be capable of mounting a storage member such as a debris container 204 in the vicinity of the battery assembly 112. The debris container 204 can be a reusable container bag or a rubbish bag with a form fitting mounting portion and may preferably have a plurality of openings, so as to avoid suction air to escape whilst capturing debris which may be sucked in.

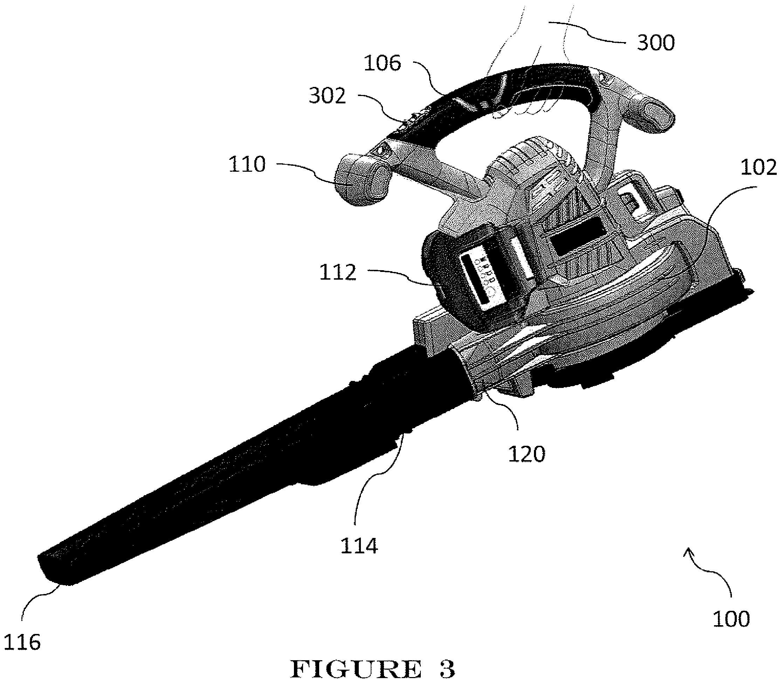

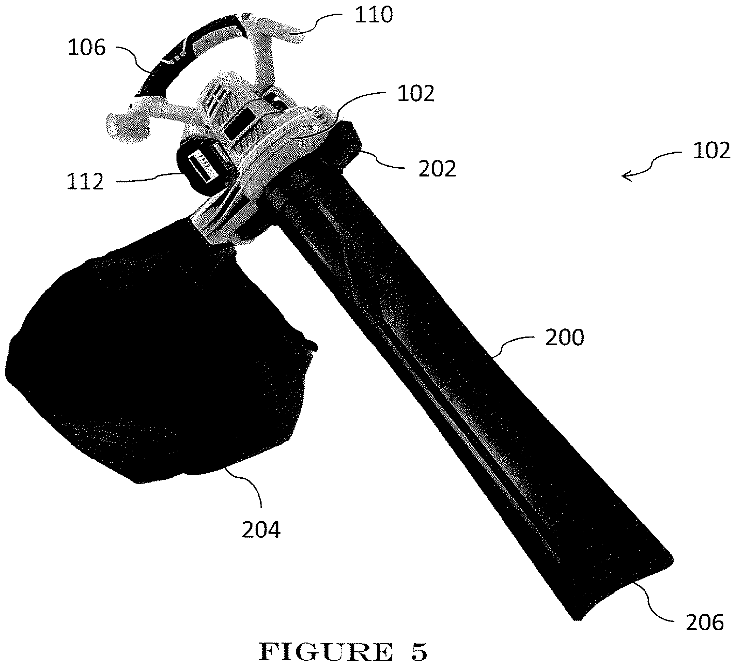

With reference to Figures 3 to 5, the blower vac of the present embodiment is illustrated with regard to the two available operating modes. The first operating mode of the blower vac can be used to generate a blowing force for moving a large amount of debris such as leaves to a desired location. In order to use the first operating mode, a user 300 will have to firstly configure the blower vac for blowing usage. To do so, a user 300 will attach the operation conduit, which is in the form of a blower tube 114 in this embodiment, to the front end 120 of the main body 102. Once the blower tube 114 is mounted, the user 300 will insert the battery assembly 112 into the cavity adjacent the main body 102 and below the handle 106 so as to provide an electrical energy source to the operation unit. After the above components are assembled, the user may grasp the handle 106 as shown in Figure 3, while operating the power switch 302 to switch on the motor for driving the fan.

As the battery assembly 112 may contribute a rather large percentage of the overall weight of the blower vac, such a forward mounting position of the battery assembly (disregarding the operation conduit) is advantageous to the user. Typically, a blower vac is used for blowing debris on a ground surface and as such, a user will experience discomfort to a certain degree as the user is generally required to carry the blower vac with a twisted wrist to urge the nozzle to the operation surface. However, the blower vac in this embodiment takes advantage of the weight of the battery assembly and provides a much more ergonomically superior design. The weight of the battery assembly may be positioned considerably more forward and thus causing the blower vac's aggregated center of gravity to be noticeably away from the gripping point of the user. Such a design results in an urging force due to gravity to be induced to the front end 120 of the blower vac and thus the user may not need to rotate and maneuver the blower vac through their wrists during usage. This feature is very advantageous to a user as more than often any typical gardening work requiring a blower vac would involve a prolonged period of holding the device. By reducing the amount of loaded movement of a user's wrist, the user is now significantly less prone to any wrist-related injuries from using the blower vac in the embodiment.

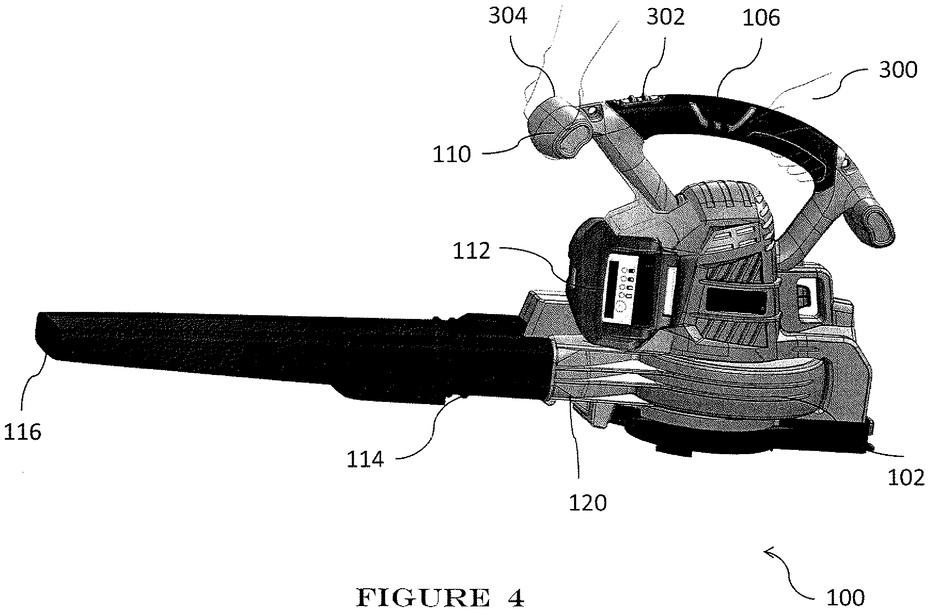

Should a user finds the need to direct the blower tube to a raised location, the user may choose to operate blower vac 100 as illustrated in Figure 4. In this example, the user 300 does not only grasp the handle 106 for operating the blower vac in vacuum mode but may also grasps the auxiliary handle 110 with a second hand 304 for additional lifting power. The auxiliary handle 110 is configured to be adjacent to the handle 106 and above the battery assembly 112. In this embodiment, the user can effortlessly adjust the direction of the conduit opening 116 in either vertical or horizontal direction that is deemed required.

Generally, once a user has used a blower vac to move debris such as leaves into a more condensed location, the user may also use the vacuuming function of the blower vac to vacuum the debris and shred them along the process of vacuum. In order to operate the vacuum mode of the blower vac, a user may attach a different set of components to the device. Firstly a user will attach an operation conduit in the form of a vacuum tube 200 to the fan cover 202 or alternative open the fan cover 202 and then attach the operation conduit to the main body 102. After attaching the vacuum tube 200, the user will attach the debris container to the blower vac for storage of debris obtained from cleaning a surface. Lastly, the user can mount the battery assembly 112 with the main body 102 of the blower vac for energising the operation unit in order to generate a vacuum force. Once the debris is sucked into the main body 102 through the vacuum tube 200, the fan of the operation unit may shred the debris to greatly reduce the volume of the debris for improving storage efficiency of the debris container. Although in some examples, the fan may not necessarily be arranged to shred the debris.

With regard to both operating modes of the blower vac in this embodiment, due to the novel placement of the battery assembly 112, the blower vac is arranged to rest in an equilibrium position about a user's grasp such that in the equilibrium position, the operation opening may be below a center of gravity of the combined main body and the battery assembly. (i.e. vacuum opening 206 and blower tube opening 116). The equilibrium position may be defined as a position where the blower vac is stable and does not subject to any unbalanced force.

In turn, in this position the blower vac 100 may be substantially near a respective operation position for the two modes. Such a design is advantageous as a user does not need to constantly asserting a force to the blower vac in order to maintain a suitable operation position of the device. The operation position of the blower mode may include holding the blower vac in a way that the operation conduit (i.e. a blower tube) is pointing at an operation surface or a ground surface at an angle. The other operation position for using the vacuum mode may include holding the blower vac in a way that the operation conduit (i.e. vacuum tube) is pointing at an operation surface or a ground surface at an angle.

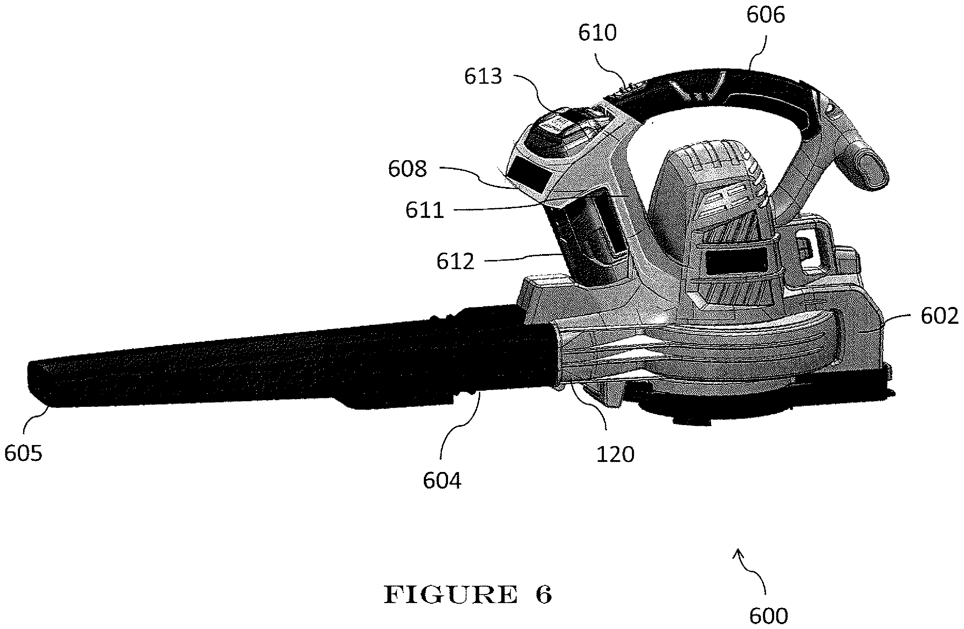

In another embodiment that is shown in Figures 6 to 7, the blower that is arranged to operate as a blower vac 600 have a slight difference in comparison to the first embodiment that has been described previously. The blower vac 600 includes, among a list of common features with the first embodiment, a differently designed handle 606 and a different battery assembly mounting method.

The handle 606 in this embodiment is also integrally formed with the main body 612 and connects to the main body 612 through two legs. However, the front leg of the handle 612 is also a bracket 611 that can hold a battery assembly 612 in a vertical orientation. This bracket 611 may include an opening 613 for a battery assembly 612 to be inserted through and the opening 613 is in the vicinity of the switch 610. This design is indeed advantageous to enhance the life cycle of the battery assembly. Even though it is shown in these Figures that the bracket has large cutouts, a person skilled in the art would appreciate that it is possible to not form all of these cutouts and therefore the battery assembly will be more protected from the elements.

In addition to newly designed bracket for mounting a battery assembly in vertical orientation, the handle 606 also includes a differently designed auxiliary handle 608. The auxiliary handle 608 is integrally formed at the front end 120 of the handle 606 and this handle 608 may also be a part of the bracket opening 613 for the battery assembly 612 to be inserted through. However, even though the form of the handle 606 and auxiliary handle 608 is different to the ones in the other embodiment, their locations on the main body 602 remain unchanged. Therefore, the handle 606 is still substantially above the main body 602.

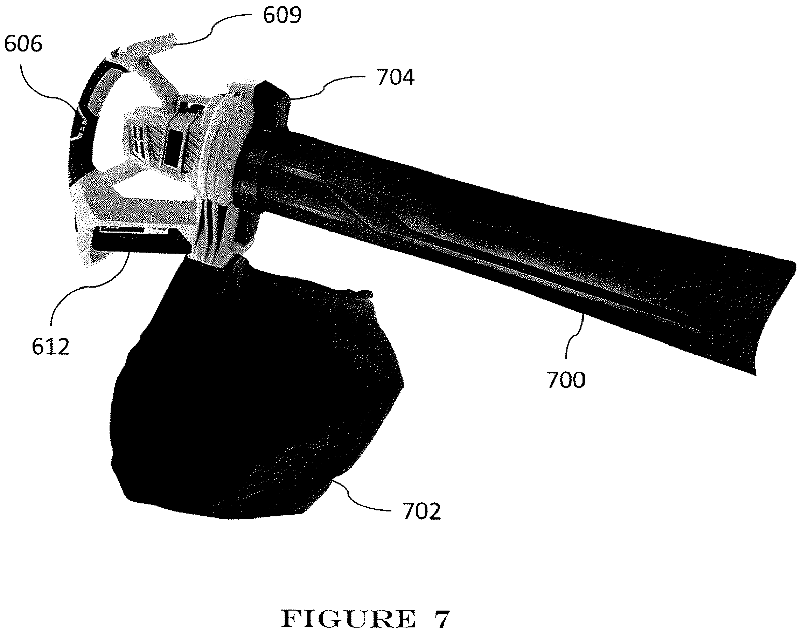

With reference to Figure 7, there is shown the blower vac of this embodiment in vacuum mode. The handle 606 in this embodiment functions almost exactly the same as the handle in the other embodiment. As the rear auxiliary handle 609 remains unchanged from the other embodiment. Therefore, the operation of the device is not noticeably affected.

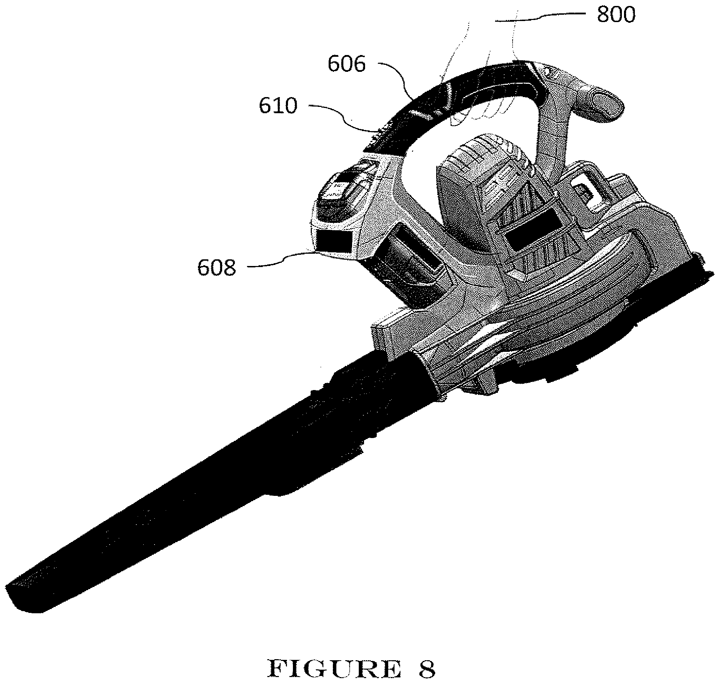

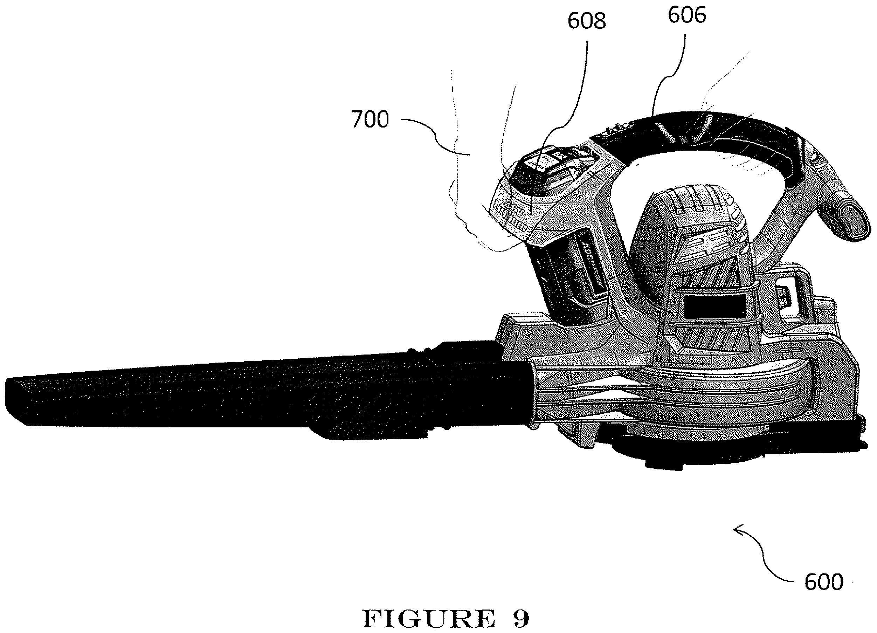

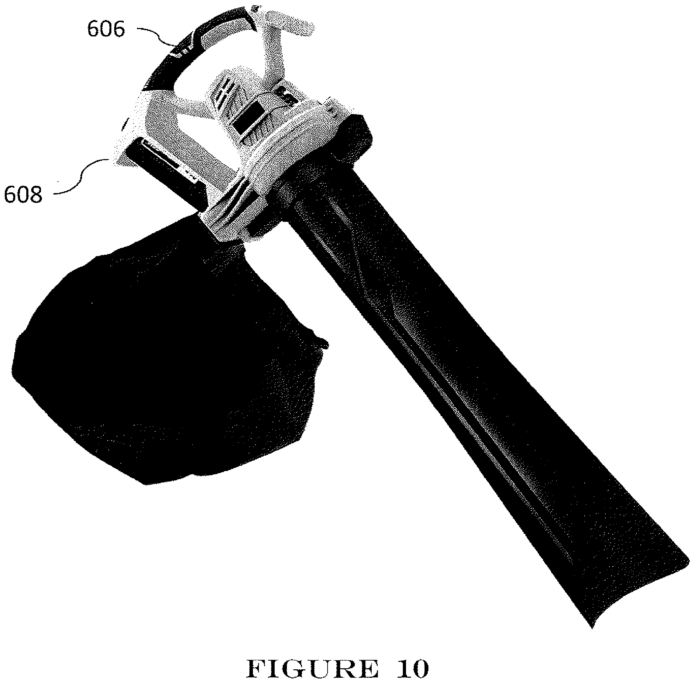

As shown in Figures 8 to 10, the two different operation modes of the blower vac in this embodiment are being illustrated. Regarding Figures 8 and 9, the blower vac is depicted to be in blower mode and is held by a user 800. The method to assemble and use the blower vac in vacuum mode is very similar to the previous embodiment. However, one difference between the previous embodiment and this embodiment are that the mounting method of the battery assembly is different as shown in the Figures whilst the gripping method for two-handed use is different. With regard to the gripping method, with reference to Figure 9, it can be seen that the auxiliary handle 608 does not provide as much gripping area for the user to grasp so as to direct the blower vac to the operation position. However, as previously described, the operating position of the blower vac is designed to be easily obtainable as the battery assembly is arranged to be mounted to the main body in a position so as to minimize a force required to maintain the blower vac in the equilibrium position. Regarding the embodiment as shown in figure 10, the design of the handle 606 and the auxiliary handle 608 has no noticeable impact to the operation of the blower vac in vacuum mode.

In embodiments that are not shown, these embodiments may include battery assemblies, handles auxiliary handles and brackets of different designs and/or dimensions. For example, a cylindrical battery assembly may be used instead of a polygonal-shaped battery assembly. In order to mount such a cylindrical battery assembly, the bracket may need to be redesigned and therefore possibly affecting the designs of the handle and the auxiliary handle.

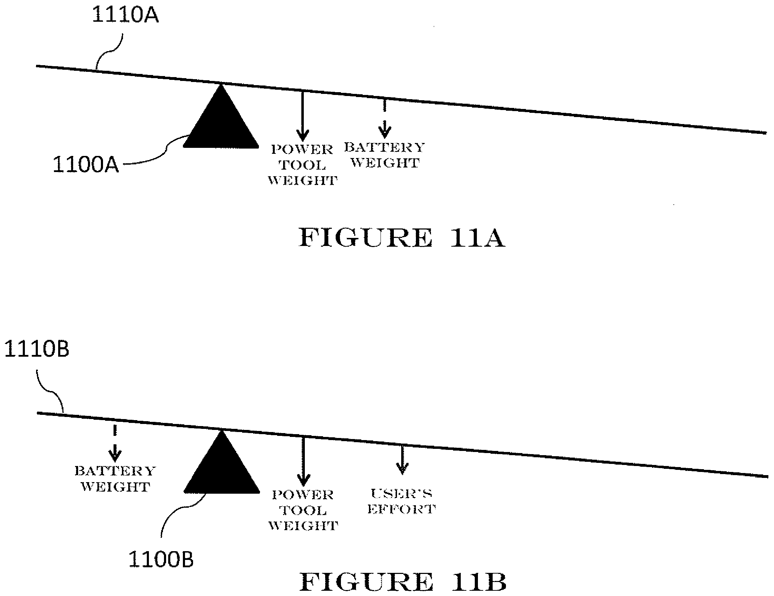

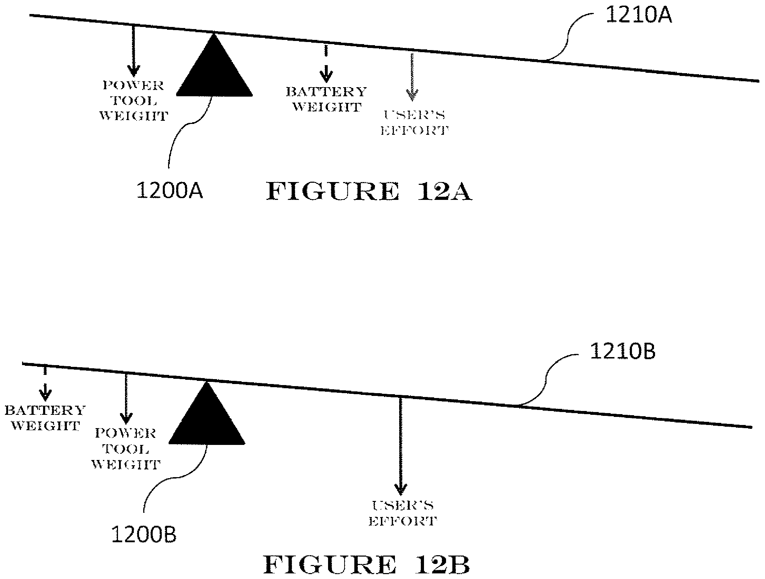

In order to elaborate the effect of the battery assembly positioning in relation to one example of the handling characteristics of a blower, Figures 11a to 12b are presented. Figures 11a and 11b are related to the blower mode of a blower in this invention whereas Figures 12a to 12b are related to the vacuum mode of the same blower.

With reference to Figure 11a and 11b, there is shown an example of a generalized load distribution diagram for two different designs of a blower. Figure 11a relates to a blower having a battery configured forward the handle 1100A being grasped by a user of the blower whereas Figure 11b relates to another blower having a battery configured behind the handle 1100B being grasped by a user of the blower. Figure 11a shows that the cantilever beam 1110A, which represents the direction of an operation conduit is tilted due to the weight of the blower and the battery. Figure 11b shows that, to tilt the cantilever beam 1110B, extra effort has to be made by the user in order to offset the loading of the battery, which is configured behind the handle. For example, the user will have to exert an extra tilting force to tilt orientation of the blower, or to apply an extra force downwardly to force such tilting of the orientation of the blower.

With reference to Figures 12a and 12b, there is illustrated another example of a generalized load distribution diagram for two different designs of a blower in vacuum mode. Figure 12a relates to a blower having a battery configured forward the handle 1200A being grasped by a user of the blower whereas Figure 12b relates to another blower having a battery configured behind the handle 1200B being grasped by a user of the blower. Figure 12a shows that the cantilever beam 1210A, which represents the direction of an operation conduit is tilted due to a combination of the weight the battery and a user's effort which is larger than the weight of the blower. Figure 12b shows that, to tilt the cantilever beam 1110B, extra effort has to be made by the user in order to offset the loading of the battery, which is configured behind the handle. Similarly, the user will have to exert an extra tilting force to tilt orientation of the blower, or to apply an extra force downwardly to force such tilting of the orientation of the blower.

In comparing these two illustrations, it can be concluded that the battery's weight can also be taken advantage of for reducing a user's effort to tilt the direction of an operation conduit downward and thus, by positioning the battery in accordance with the embodiments of the invention, the embodiments are advantageous in that the weight distribution of the blower is optimized to direct the blower to an optimized direction when the blower is naturally or ergonomically held by a user. The user will only have to exert a minimum force required to hold and tilt the blower for different operations.

Any reference to prior art contained herein is not to be taken as an admission that the information is common general knowledge, unless otherwise indicated.

## Claims

1. A blower (100, 600) comprising:
a main body (102, 602) having:
an operation unit arranged to deliver a blowing force to an operation opening (116, 605);
a handle (106, 606) at a position substantially above the operation unit; and
a battery port or bracket (611) arranged at a front end (120) of the main body (102, 602), for mounting a battery assembly (112, 612), and
a blower tube (114, 604) arranged at the front end (120) of the main body (102, 602), the blower tube (114, 604) including the operation opening (116, 605),
wherein, when the battery assembly (112, 612) is mounted to the battery port or bracket (611) and combined with the main body (102, 602), and when the blower (100, 600) is naturally held by a user, a center of gravity of the combined main body (102, 602) and the battery assembly (112, 612) is arranged to urge the operation opening (116, 605) towards an operating surface.

2. The blower (100, 600) of claim 1, further comprising the battery assembly (112, 612).

3. The blower (100, 600) of claim 1 or 2, wherein the center of gravity is adjacent to a connecting position at which the blower tube (114, 604) connects to the main body (102, 602).

4. The blower (100, 600) of any one of claims 1 to 3, wherein the operation opening (116, 605) is arranged below the center of gravity.

5. The blower (100, 600) of any one of claims 1 to 4, further comprising a power switch (302, 610) arranged on the handle (106, 606) and adjacent the battery port or bracket (611).

6. The blower (100, 600) of any one of claims 1 to 5, wherein the battery port or bracket (611) is arranged adjacent to the operation unit.

7. The blower (100, 600) of any one of claims 1 to 6, wherein the handle (106, 606) comprises an elongated center portion that consists of multiple sections of different radii.

8. The blower (100, 600) of any one of claims 1 to 7, wherein the main body (102, 602) further comprises an auxiliary handle (110, 608, 609) adjacent to the handle (106, 606).

9. The blower (100, 600) of claim 8, wherein the auxiliary handle (110, 608) is positioned substantially above the battery port or bracket (611).

10. The blower (100, 600) of claim 8 or 9, wherein the auxiliary handle (110, 608) is integrally formed at the front end (120) of the handle (106, 606).

11. The blower (100, 600) of any one of claims 1 to 10, wherein the blower tube (114, 604) is arranged to be removably mounted to the front end (120) of the main body (102, 602).

12. The blower (100, 600) of any one of claims 1 to 11, wherein the operation unit includes
a motor, and
a fan or impeller unit arranged to be driven by the motor; and
wherein the motor is arranged to operate with a rotational axis substantially perpendicular to a central axis of the operation opening (116, 605) to deliver blowing force to the operation opening (116, 605).

13. The blower (100, 600) of claim 12, wherein the blower (100, 600) is a blower vac arranged to selectively operate as the blower and a vacuum.

14. The blower vac (100, 600) of claim 13, further comprising:
a vacuum tube (200) arranged to be attached to a bottom portion of the main body (102, 602); and
a debris container (204) arranged to be attached at the front end (120) of the main body (102, 602);
wherein when the blower vac is operated as a blower, the blower tube (114, 604) is attached to the main body (102, 602) while the vacuum tube (200) and the debris container (204) are not attached to the main body (102, 602); and
wherein when the blower is operated as a vacuum, the vacuum tube (200) and the debris container (204) are attached to the main body (102, 602) while the blower tube (114, 604) is not attached to the main body (102, 602).

15. The blower vac (100, 600) of claim 14, wherein when the blower vac is operated as a vacuum, the operation unit is arranged to deliver a suction force to an operation opening (206) of the vacuum tube (200).

## Patentansprüche

1. Bläser (100, 600), der umfasst:
einen Hauptkörper (102, 602), der aufweist:
eine Funktions-Einheit, die so eingerichtet ist, dass sie einer Funktionsöffnung (116, 605) eine Blaskraft zuführt;
einen Griff (106, 606) an einer Position im Wesentlichen oberhalb der Funktions-Einheit; und
eine Batterieaufnahme oder-halterung (611), die zum Anbringen einer Batteriebaugruppe (112, 612) an einem vorderen Ende (120) des Hauptkörpers (102, 602) angeordnet ist, sowie
ein Blasrohr (114, 604), das an dem vorderen Ende (120) des Hauptkörpers (102, 602) angeordnet ist, wobei das Blasrohr (114, 604) die Funktionsöffnung (116, 605) enthält,
wobei, wenn die Batteriebaugruppe (112, 612) an der Batterieaufnahme oder -halterung (611) angebracht und mit dem Hauptkörper (102, 602) verbunden ist, und wenn der Bläser (100, 600) von einem Benutzer normal gehalten wird, ein Schwerpunkt des Hauptkörpers (102, 602) und der Batteriebaugruppe (112, 612), die miteinander verbunden sind, so angeordnet ist, dass die Funktionsöffnung (116, 605) in Richtung einer zu behandelnden Fläche gelenkt wird.

2. Bläser (100, 600) nach Anspruch 1, der des Weiteren die Batteriebaugruppe (112, 612) umfasst.

3. Bläser (100, 600) nach Anspruch 1 oder 2, wobei der Schwerpunkt an eine Verbindungsposition angrenzt, an der das Blasrohr (114, 604) mit dem Hauptkörper (102, 602) verbunden ist.

4. Bläser (100, 600) nach einem der Ansprüche 1 bis 3, wobei die Funktionsöffnung (116, 605) unterhalb des Schwerpunktes angeordnet ist.

5. Bläser (100, 600) nach einem der Ansprüche 1 bis 4, der des Weiteren einen Stromschalter (302, 610) umfasst, der an dem Griff (106, 606) und an die Batterieaufnahme oder -halterung (611) angrenzend angeordnet ist.

6. Bläser (100, 600) nach einem der Ansprüche 1 bis 5, wobei die Batterieaufnahme oder-halterung (611) an die Funktions-Einheit angrenzend angeordnet ist.

7. Bläser (100, 600) nach einem der Ansprüche 1 bis 6, wobei der Griff (106, 606) einen länglichen Mittelabschnitt umfasst, der aus mehreren Teilabschnitten mit unterschiedlichen Radien besteht.

8. Bläser (100, 600) nach einem der Ansprüche 1 bis 7, wobei der Hauptkörper (102, 602) des Weiteren einen an den Griff (106, 606) angrenzenden Zusatzgriff (110, 608, 609) umfasst.

9. Bläser (100, 600) nach Anspruch 8, wobei der Zusatzgriff (110, 608) im Wesentlichen oberhalb der Batterieaufnahme oder-halterung (611) positioniert ist.

10. Bläser (100, 600) nach Anspruch 8 oder 9, wobei der Zusatzgriff (110, 608) integral an dem vorderen Ende (120) des Griffs (106, 606) ausgebildet ist.

11. Bläser (100, 600) nach einem der Ansprüche 1 bis 10, wobei das Blasrohr (114, 604) so eingerichtet ist, dass es abnehmbar an dem vorderen Ende (120) des Hauptkörpers (102, 602) angebracht ist.

12. Bläser (100, 600) nach einem der Ansprüche 1 bis 11, wobei die Funktions-Einheit enthält:
einen Motor, und
eine Flügelrad- oder Gebläserad-Einheit, die so eingerichtet ist, dass sie durch den Motor angetrieben wird; und
wobei der Motor so eingerichtet ist, dass er mit einer Drehachse im Wesentlichen senkrecht zu einer Mittelachse der Funktionsöffnung (116, 605) arbeitet, um der Funktionsöffnung (116, 605) Blaskraft zuzuführen.

13. Bläser (100, 600) nach Anspruch 12, wobei der Bläser (100, 600) ein Saugbläser ist, der so eingerichtet ist, dass er selektiv als der Bläser oder ein Sauger arbeitet.

14. Saugbläser (100, 600) nach Anspruch 13, der des Weiteren umfasst:
ein Saugrohr (200), das so eingerichtet ist, dass es an einem unteren Abschnitt des Hauptkörpers (102, 602) angebracht ist; und
einen Schmutzbehälter (204), der so eingerichtet ist, dass er an dem vorderen Ende (120) des Hauptkörpers (102, 602) angebracht ist;
wobei, wenn der Saugbläser als ein Bläser betrieben wird, das Blasrohr (114, 604) an dem Hauptkörper (102, 602) angebracht ist, während das Saugrohr (200) und der Schmutzbehälter (204) nicht an dem Hauptkörper (102, 602) angebracht sind; und
wobei, wenn der Bläser als ein Sauger betrieben wird, das Saugrohr (200) und der Schmutzbehälter (204) an dem Hauptkörper (102, 602) angebracht sind, während das Blasrohr (114, 604) nicht an dem Hauptkörper (102, 602) angebracht ist.

15. Saugbläser (100, 600) nach Anspruch 14, wobei die Funktions-Einheit so eingerichtet ist, dass sie, wenn der Saugbläser als ein Sauger betrieben wird, einer Funktionsöffnung (206) des Saugrohrs (200) eine Saugkraft zuführt.

## Revendications

1. Souffleur (100, 600) comprenant :
un corps principal (102, 602) comportant :
une unité fonctionnelle agencée pour fournir une force de soufflage à une ouverture fonctionnelle (116, 605) ;
une poignée (106, 606) à une position substantiellement au-dessus de l'unité fonctionnelle ; et
un port ou support de batterie (611) agencé à une extrémité avant (120) du corps principal (102, 602) pour monter un ensemble de batterie (112, 612), et
un tube de souffleur (114, 604) agencé à l'extrémité avant (120) du corps principal (102, 602), le tube de souffleur (114, 604) comprenant l'ouverture fonctionnelle (116, 605),
dans lequel, quand l'ensemble de batterie (112, 612) est monté sur le port ou support de batterie (611) et est combiné au corps principal (102, 602), et quand le souffleur (100, 600) est naturellement maintenu par un utilisateur, le centre de gravité combiné du corps principal (102, 602) et de l'ensemble de batterie (112, 612) est agencé pour pousser l'ouverture fonctionnelle (116, 605) vers une surface fonctionnelle.

2. Souffleur (100, 600) selon la revendication 1, comprenant en outre l'ensemble de batterie (112, 612).

3. Souffleur (100, 600) selon la revendication 1 ou 2, dans lequel le centre de gravité est adjacent à une position de connexion où le tube de souffleur (114, 604) se connecte au corps principal (102, 602).

4. Souffleur (100, 600) selon l'une quelconque des revendications 1 à 3, dans lequel l'ouverture fonctionnelle (116, 605) est agencée sous le centre de gravité.

5. Souffleur (100, 600) selon l'une quelconque des revendications 1 à 4, comprenant en outre un interrupteur d'alimentation (302, 610) agencé sur la poignée (106, 606) et adjacent au port ou support de batterie (611).

6. Souffleur (100, 600) selon l'une quelconque des revendications 1 à 5, dans lequel le port ou support de batterie (611) est agencé de manière adjacente à l'unité fonctionnelle.

7. Souffleur (100, 600) selon l'une quelconque des revendications 1 à 6, dans lequel la poignée (106, 606) comprend une portion centrale allongée qui consiste en de multiples sections de différents rayons.

8. Souffleur (100, 600) selon l'une quelconque des revendications 1 à 7, dans lequel le corps principal (102, 602) comprend en outre une poignée auxiliaire (110, 608, 609) adjacente à la poignée (106, 606).

9. Souffleur (100, 600) selon la revendication 8, dans lequel la poignée auxiliaire (110, 608) est positionnée substantiellement au-dessus du port ou support de batterie (611) .

10. Souffleur (100, 600) selon la revendication 8 ou 9, dans lequel la poignée auxiliaire (110, 608) est formée intégralement à l'extrémité avant (120) de la poignée (106, 606) .

11. Souffleur (100, 600) selon l'une quelconque des revendications 1 à 10, dans lequel le tube de souffleur (114, 604) est agencé pour être monté de manière amovible à l'extrémité avant (120) du corps principal (102, 602).

12. Souffleur (100, 600) selon l'une quelconque des revendications 1 à 11, dans lequel l'unité fonctionnelle comprend
un moteur, et
une unité de ventilateur ou de turbine agencée pour être entraînée par le moteur ; et
dans lequel le moteur est agencé pour fonctionner avec un axe de rotation substantiellement perpendiculaire à l'axe central de l'ouverture fonctionnelle (116, 605) pour procurer une force de soufflage à l'ouverture fonctionnelle (116, 605).

13. Souffleur (100, 600) selon la revendication 12, dans lequel le souffleur (100, 600) est un souffleur/aspirateur agencé pour fonctionner sélectivement comme souffleur et comme aspirateur.

14. Souffleur/aspirateur (100, 600) selon la revendication 13, comprenant en outre :
un tube d'aspirateur (200) agencé pour être attaché à une portion de fond du corps principal (102, 602) ; et
un bac à déchets (204) agencé pour être attaché à l'extrémité avant (120) du corps principal (102, 602) ;
dans lequel, quand le souffleur/aspirateur est utilisé comme un souffleur, le tube de souffleur (114, 604) est attaché au corps principal (102, 602) alors que le tube d'aspirateur (200) et le bac à déchets (204) ne sont pas attachés au corps principal (102, 602) ; et
dans lequel, quand le souffleur/aspirateur est utilisé comme un aspirateur, le tube d'aspirateur (200) et le bac à déchets (204) sont attachés au corps principal (102, 602) alors que le tube de souffleur (114, 604) n'est pas attaché au corps principal (102, 602).

15. Souffleur/aspirateur (100, 600) selon la revendication 14, dans lequel, quand le souffleur/aspirateur est utilisé comme un aspirateur, l'unité fonctionnelle est agencée pour procurer une force d'aspiration à une ouverture fonctionnelle (206) du tube d'aspirateur (200).
